# EUROPEAN PATENT SPECIFICATION

(11) **EP 4 433 801 B1**
(45) Date of publication and mention of the grant of the patent: **19.03.2025**
(21) Application number: 21851699.5
(22) Date of filing: 17.12.2021
(51) Int. Cl.: G01N 11/06, G01N 11/08

(54) **MEASUREMENT SYSTEM FOR A LIQUID**
MESSSYSTEM FÜR EINE FLÜSSIGKEIT
MEASUREMENT SYSTEM FOR A LIQUID

(43) Date of publication of application: 25.09.2024
(73) Proprietor: TotalEnergies OneTech, 92400 Courbevoie (FR); Hemovis, 94120 Fontenay-sous-Bois (FR)
(72) Inventor: DE TILLY, Alexandre, 94120 Fontenay-sous-Bois (FR); JOUENNE, Stéphane, 64018 Pau Cedex (FR); HEURTEUX, Guillaume, 64018 Pau Cedex (FR); SANTANACH CARRERAS, Enric, 64018 Pau Cedex (FR)
(74) Representative: Bandpay & Greuter
(86) International application number: PCT/IB2021/000910
(87) International publication number: WO 2023/111614

(56) References cited:
- WO-A1-2010/038230
- WO-A1-2014/094791
- US-A1- 2006 065 044
- US-B2- 8 104 329

## Description

### TECHNICAL FIELD

The disclosure relates to the field of measurement systems for liquids, such as viscometers, and more specifically to a measurement system, a measurement method and a kit.

### BACKGROUND

A number of systems are available on the market for the measurement of liquid properties, such as viscosity, including capillary viscometers, falling sphere viscometers, vibrational viscometers and rotational viscometers. For each type of viscometer, the liquid is in contact with a surface which creates some resistance to the flow of the liquid. Viscosity is of value in numerous applications, such as but not limited to cosmetic, lubricant, paint, ink, food, medical, polymer, oil and gas industries. Single phase fluids that are very homogeneous down to the atomic scale are generally Newtonian, meaning that viscosity does not depend on the loading rate. For many liquids, such as polymer melts, polymers in solutions, dispersions, suspensions, emulsions and pastes, viscosity depends on both the loading rate (or more precisely, the shear rate) and the level of confinement. Due to gravitational, thermal, electrostatic and flow effects along with steric, hydrodynamic, viscoelastic and chemical forces, a structuration of the fluid can occur at rest or during the flow. This complicates the viscosity measurement and its interpretation as it makes the result sensitive to the measuring geometry and the applied shear stress and raises reproducibility and measurement problems in general. For many systems, a low-viscosity layer depleted from the elements participating in the viscosification appear near the solid surface across which the flow occurs. Such a wall depleted layer effect results in a slip of the solution which in turn results in an apparent viscosity that depends on the level of fluid confinement.

For example, blood is a loaded liquid flowing in deformable channels having a wide array of diameters and flow rates, such as but not limited to, arteries, veins, arterioles, venules and capillaries. In addition, because of the living nature of the flowing system, the deformability and the interactions between its constituting elements and the continuous exchanges of the flowing fluid through and with the wall of the flowing system, the viscosity cannot be defined as universal and intrinsic. The viscosity of the flow may vary with different geometrical characteristics such as but not limited to, the diameter of the capillary, its orientation (vertical, horizontal or deviated) and its length. It may also vary with flow conditions related to the applied flow rate or pressure drop and physicochemical conditions related to temperature, pH, additives and the evolution of the blood system between the sampling and the measurement.

Another example is the flow of polymer solutions used in enhanced oil recovery (EOR). Synthetic acrylamide-based copolymers are used for increasing the viscosity of the injected water so as to improve the mobility ratio between the pushing fluid and the oil to be displaced. The polymer solution propagates in the pores of the reservoir rock. Because of the finite dimension of the polymer chains, there exists a small depleted layer at the pore wall which results in an apparent slip. It is therefore preferable that the ratio between the polymer coil size and the pore size increases. If the size of the pore is big compared to the size of the coil, the viscosity in the pore is close to the bulk viscosity of the liquid, which is also the viscosity measured on a viscometer in which flow is not confined. On the other hand, when the size of the pore approaches the size of the polymer coil, the apparent viscosity assuming a Poiseuille flow in the pore is lower than the bulk viscosity.

From these two examples, one can clearly understand why viscosity is not an intrinsic property, its sensitivity to the measuring equipment and conditions, the measuring geometry, the measuring protocol and the different factors which may affect its value.

Further, a lot of systems for measuring viscosity are complex to use and are not well adapted to harsh environments, such as, for example, remote locations (desertic, offshore) with difficulties for supplying equipment and/or reagents to perform maintenance. Another example includes harsh weather conditions which forbid the use of sophisticated and high tech instruments, such as a humid and/or hot atmosphere and/or the presence of sand and/or dusts. Another example includes harsh applicative conditions such as measurements obtained by poorly trained people who may lack the know-how for using complex procedures or apparatus and/or measurements obtained on moving structures such as boats or offshore platforms.

US 2006/065044 A1 discloses a viscometer including a thermal block, a thermo device to control temperature of the thermal block, a temperature sensor to sense temperature of the thermal block, a capillary tube embedded in the thermal block such that the capillary tube is in thermal contact with the thermal block, an entrance tube connected to the capillary tube and embedded in the thermal block, a velocity tube connected to the capillary tube and embedded in the thermal block and at least two flow sensors aligned along the velocity tube adapted to measure velocity of the test specimen in the velocity tube.

Thus, within this context, there is still a need for an improved solution for performing a measurement on a liquid in an easy, accurate and efficient manner.

### SUMMARY

The present invention relates to a measurement system according to claim 1. Preferred features of the invention are set out in the dependent claims.

Such a system provides an improved solution for performing a measurement on a liquid in an easy, accurate and efficient manner.

The measurement system may be configured to provide an estimate of a flow property value of the liquid on the basis of the calculation of pressure drops across the capillary tube, for example using Poiseuille's law or the equations of Idelchik. The flow property may be the viscosity of the liquid, the measurement system thereby forming a viscosity measurement system.

At least one wall of the longitudinal receiving reservoir may be transparent, and the measurement device may comprise a camera configured to detect an instantaneous position of the flow front of the liquid in the longitudinal receiving reservoir through the at least one wall.

The ratio of the transverse cross-sectional area of the longitudinal receiving reservoir to the transverse cross-sectional area of the capillary tube may lie between 1 and 600, for example 225.

A volume of the inner chamber of the longitudinal storing reservoir lies between 1mL and 20mL, for example 2.0mL.

A volume of the inner chamber of the longitudinal receiving reservoir lies between 0.5mL and 20mL, for example 1mL.

The longitudinal storing reservoir may have an inner diameter lying between 1mm and 5mm, for example 3.0mm.

The longitudinal storing reservoir may have a total length lying between 3.0cm and 10.0cm, for example 5.0cm.

The capillary tube may have an inner diameter lying between 0.1mm and 1mm, for example 0.39mm.

The capillary tube may have a total length lying between 10mm and 100mm, for example 60mm.

The longitudinal storing reservoir may be a sampling tube.

The longitudinal receiving reservoir may be a syringe body or a sampling tube.

The capillary tube may be a hollow needle or a cannula.

The longitudinal storing reservoir is closed by a cap provided with a septum.

The source of pressurized gas may be configured to deliver a gas pressurized up to 1.5bar, for example 1bar.

The measurement system may further comprise another capillary tube performing the fluid connection of the source of pressurized gas to the longitudinal storing reservoir, for example a hollow needle or a cannula, for example a bent hollow needle or a bent cannula.

The longitudinal storing reservoir and/or the capillary tube and/or the longitudinal receiving reservoir and/or another capillary tube performing the fluid connection of the source of pressurized gas to the longitudinal storing reservoir may be disposable.

The measurement device may be configured to provide a real time result of the measurement relative to the flow of the liquid inside the longitudinal receiving reservoir and/or of the viscosity of the liquid.

The inner chamber of the longitudinal storing reservoir and/or the inner chamber of the longitudinal receiving reservoir may be configured to be set under a controlled atmosphere.

The invention further relates to a measurement method according to claim 12 and to a kit according to claim 14.

The longitudinal storing reservoir and/or the capillary tube and/or the longitudinal receiving reservoir and/or another capillary tube performing the fluid connection of the source of pressurized gas to the longitudinal storing reservoir may be thrown away after a single use.

### BRIEF DESCRIPTION OF THE DRAWINGS

Non-limiting examples will now be described in reference to the accompanying drawings, where:
- FIG. 1 shows an illustration of an example of the measurement system in a schematic form;
- FIG. 2 shows an illustration of an example of the measurement system;
- FIG. 3 shows an example of the measurement system;
- FIG. 4 shows a graph relating viscosity, shear rate and pressure.

### DETAILED DESCRIPTION

It is proposed a measurement system comprising a source of pressurized gas configured to deliver a gas at a predetermined pressure, a longitudinal storing reservoir configured to store a liquid, a longitudinal receiving reservoir, and a capillary tube. The capillary tube fluidly connects the longitudinal storing reservoir and the longitudinal receiving reservoir. The source of pressurized gas is fluidly connected to the longitudinal storing reservoir to pressurize an inner chamber of the longitudinal storing reservoir. The measurement system also comprises a measurement device. The measurement device is configured to perform a measurement relative to the flow of the liquid inside an inner chamber of the longitudinal receiving reservoir when the pressurized gas is provided in the inner chamber of the longitudinal storing reservoir by the source of pressurized gas. The longitudinal storing reservoir, the capillary tube and the longitudinal receiving reservoir are configured so as to be positioned horizontally during the measurement relative to the flow of the liquid.

Such a system improves the ease, accuracy and efficiency of performing a measurement on a liquid.

Notably, the longitudinal storing reservoir, the capillary tube and the longitudinal receiving reservoir are longitudinal and arranged horizontally during the measurement (i.e. the longitudinal storing reservoir, the capillary tube and the longitudinal receiving reservoir each present a longitudinal shape which extends horizontally during use). This limits the phenomenon of sedimentation in case the liquid is loaded.

This horizontal arrangement also optimizes the area of the fluid in the longitudinal receiving reservoir exposed to a predetermined pressure, as there is a relatively large surface area of the liquid in the longitudinal storing reservoir (i.e. area of the horizontal liquid surface exposed to pressurized gas above it, also referred to as "sky") compared to that of the (e.g. substantially vertical) meniscus of the liquid entering the longitudinal receiving reservoir. This therefore increases the rate of applied pressure and consequently the speed of the advancement of the liquid front. This facilitates performing a sufficiently rapid measurement for only a small quantity of applied gas. This may be particularly effective for a small liquid sample of, for example, 1 mL, or of such order. The liquid may enter the longitudinal receiving reservoir at a rate of, for example, 0.01 mL/ms, or of such order. The total measurement may have a duration of, for example, 1 minute or less, which further assists in reducing sedimentation. A chain of five measurements may, for example, take 15 minutes, (including the time taken to discard and replace any or all of the longitudinal storing reservoir, the capillary tube and/or the longitudinal receiving reservoir) which is also of added benefit to the user for everyday use, especially in harsh conditions such as a moving boat.

The relatively high ratio of the area of the longitudinal storing reservoir's sky above the liquid sample relative to the area of the meniscus of the liquid inside the longitudinal receiving reservoir may ensure that, upon a relatively low pressurization, the liquid immediately enters the capillary tube with substantially no delay, and that there is no or negligible pressure drop in the longitudinal storing reservoir and/or the longitudinal receiving reservoir. As a result, the measurement may represent substantially integrally what occurs inside the capillary tube. This facilitates the measurement and/or any post-processing thereof, and this makes the eventual result particularly accurate.

Further benefit may be provided to the user in that the system may optionally be sealed from the influence of external elements and may operate anaerobically, preventing any contamination of the liquid sample. This may be of importance in many applications. For example, the liquid may be blood. In such a case, change of the system can occur because of degradation / contamination due to the contact of the blood with the atmosphere, coagulation. In another example, the liquid may be a polymer solution. For performing bulk viscosity measurements on such solutions, it is preferable to avoid the contact with the atmosphere since the oxygen leads to a rapid and severe degradation of the polymer chains which results in a loss of the solution viscosity. Likewise, the system may optionally be sealed for security purposes so as to protect the user from hazards such as, but not limited to, harmful odors or burns.

Moreover, the horizontal positioning of the longitudinal storing reservoir, the capillary tube and the longitudinal receiving reservoir minimizes the variation in height of the liquid upstream or downstream of the measuring device. This in turn minimizes any back pressure downstream of the capillary tube due to hydrostatic pressure and so, at a predetermined pressure, enables measurements to be more stable and non-transient.

Further, in the case of blood or polymers in solution the measurement system is highly reliable in that the measurement device performs the measurement on the liquid in real conditions of microcirculation or flow in micro canals such as those found in porous rocks, as opposed to providing an apparent or relative measurement. As liquid enters the longitudinal receiving reservoir from the capillary tube, the behavior of the liquid front directly represents its real behavior during microcirculation or flow on a similar scale. Measurements obtained by the measuring device thus directly inform on real behavior of the liquid in applications where the liquid performs microcirculation or flow on a similar scale.

In particular, the measurement that the measurement device is configured to perform may be any rheological measurement, such as viscosity but not limited thereto.

The capillary tube may be straight, or alternatively present any geometry or microfabricated geometry that may allow for the formation of a meniscus, such as a coiled geometry. The geometry may additionally or alternatively comprise a contraction and/or an expansion and/or a bend, and/or any other geometry through which the liquid may flow as described in the literature of Idelchik and/or Poiseuille. The capillary tube may optionally present a cross-sectional inner diameter inferior to 3mm. The capillary may optionally present a cross-sectional outer diameter inferior to 4.5mm. The capillary tube may be made of metal, for example stainless steel, or alternatively of any other material, such as titanium, tantalum, platinum, palladium and/or an alloy containing any such metal. The capillary tube may consist of a fully hollow tube, or alternatively may comprise a microscale electromechanical system (MEMS). The capillary tube may additionally or alternatively have some singularities such as, for example, a coating for drag force.

The measurement relative to the flow of the liquid that the measurement device is configured to perform represents the flow of the liquid in the capillary tube. This may be possible as, for given component geometries and a controlled applied pressure (and hence a controlled flow rate), pressure drops may become negligeable across all components except the capillary tube. This will therefore allow for the flow rate to represent only the flow inside the capillary tube. The measurement may comprise a value estimation for one or more properties of the liquid related to the manner by which it flows inside the inner chamber of the longitudinal receiving reservoir when the pressurized gas is provided in the inner chamber of the longitudinal storing reservoir by the source of pressurized gas. The one or more properties may comprise any one or any combination of the following properties: speed of advancement of a front of the liquid inside the inner chamber, flow rate inside the inner chamber, viscosity, shear rate, drag coefficient, drag force and/or surface tension. The measurement may be performed in any manner under conditions which are for example anaerobic. In particular, the system may be configured to first estimate a value of one or more of the properties, and then calculate a value of one or more other properties based on the first estimation. For example, the system may estimate (e.g. calculate) flow rate based on the liquid front's speed of advancement. Alternatively or additionally, the system may estimate (e.g. calculate) viscosity based on any one or more of the liquid front's speed of advancement, flow rate, and/or shear rate.

For example, the system may measure the advancement of the flow front for liquid samples flowing over a range of geometries. A disposable capillary tube of a certain geometry may discarded after a first test on a liquid sample. A second test may then be carried out on a new liquid sample with a new capillary tube comprising a different geometry or singularity such as a contraction. A third test may then be carried out on a new liquid sample with a new capillary tube comprising a different geometry or singularity such as an expansion. The system, having estimated a flow property of the liquid (e.g. viscosity) for each test, may therefore allow for an analysis to be made on the fluid for different types of flow. In a particular example, the measurement system forms a viscosity measurement system. In other words, the measurement system is configured to output an estimate of the viscosity of the liquid, optionally in addition to outputting an estimate of one or more properties such the one(s) relied upon for calculating the viscosity (e.g. including front's speed of advancement, flow rate, and/or shear rate). In the case of an example of an EOR polymer, the capillary tube may be of the size of a micro canal similar to those found in porous rocks. A small sample of say, a synthetic acrylamide-based copolymer of 1 mL, may be pressurized in the longitudinal storing reservoir to be forced through the capillary tube. As the capillary tube is of a confined geometry, i.e. of a size approaching that of a polymer coil, the viscosity of the fluid caused by the generated slip (i.e. the resulting meniscus) in the capillary tube can be measured in the longitudinal receiving reservoir. The viscosity value output itself may be determined from the measuring device recording the advancement of the fluid front (i.e. the meniscus) as it enters the longitudinal receiving reservoir.

The measurement system may provide any such value output on the basis of the calculation of pressure drops across the capillary tube. This may be possible as, for given component geometries and a controlled applied pressure (and hence a controlled flow rate), pressure drops may become negligeable across all components except the capillary tube. This will therefore allow for the flow rate to represent only the flow inside the capillary tube.

For example, the longitudinal storing reservoir may be configured to be of a longitudinal cross-sectional area that is significantly greater than the surface area of the liquid meniscus flowing through the capillary tube. Similarly, the longitudinal receiving reservoir may be configured to be of a transverse cross-sectional area that is significantly greater than the surface area of the liquid meniscus flowing through the capillary tube. The measurement system may provide the value output using the equations of Idelchik and/or Poiseuille's law and/or alternative equations relating to pressure differentials.

Any such value output may comprise storing the output value on persistent memory, sending the output value over a network to a distant computer, and/or displaying a graphical representation of the output value e.g. on a screen. The persistent memory and/or the screen may be part of the system (e.g. part of the measurement device), or alternatively those of a computer connected to the system (e.g. via the measurement device).

Looking further at the example of measuring viscosity, the measurement system is highly reliable. The measurement device may determine the true viscosity of the liquid in microcirculation or flow on a similar scale, as opposed to providing an apparent or relative measurement. As liquid enters the longitudinal receiving reservoir from the capillary tube, the speed of advancement of the liquid front directly represents microcirculation or flow on a similar scale of the liquid. The measurement of such a speed, obtained by the measuring device, thus directly informs on real behavior of the liquid in applications where the liquid performs microcirculation or flow on a similar scale.

The term "liquid" refers to an (substantially) incompressible fluid of constant volume, an incompressible fluid being a fluid whose volume or density does not change with pressure. The liquid on which the measurement is performed may be a complex fluid, a Newtonian fluid, or a turbid fluid. The liquid may be blood, oil and water, an EOR polymer solution, an oil, such as crude oil or thin motor oil, glycerol diluted in water, a lubricant or a paint.

The expression "complex fluid" concerns all non-Newtonian liquids or fluids, that is to say for those that depend notably on the shear rate. The complex fluid may be, for example, a fluid presenting at least two immiscible phases, for example of a gas-solid type, such as granular flow. According to another example, the complex fluid is a liquid presenting at least two immiscible phases, for example of a liquid-liquid type (for example, the case of oil and water; immiscible) or liquid-solid (for example, the case of blood where the red blood cells (solids) are in plasma (liquid), or for example, the case of EOR polymer solutions, or for example, certain types of oil, such as crude oil). The complex fluid is however not limited to the presence of two immiscible phases. Thus, such a complex fluid can equally be a Bingham fluid (in the case of certain types of petrol, for example). The viscosity of such a fluid depends on the shear rate, in particular on the fact that there exists a threshold value for this shear rate, above which this type of fluid behaves as a viscous fluid and below which it behaves as a solid. Such a complex fluid also concerns, to provide another example, a diluted solution such as glycerol diluted in water. Such a complex fluid also concerns a Casson fluid. Blood, for example, meets the definition for a complex fluid as previously described. More precisely, it concerns a liquid that has the capacity to flow and in which there exists a liquid phase (plasma, non-Newtonian) and a solid phase (red blood cells, that form deformable material bodies). The blood potentially changes homogeneity, as it is influenced by its components, and in particular presents some instabilities, some phenomena of hysteresis and some notable differences depending on whether the flow is controlled by stress or speed in different types of geometry. Generally, the viscosity of a complex fluid varies as a function of shear rate, constraint, velocity fields and dynamic and kinematic moments in flow.

A Newtonian fluid is a fluid for which, the viscous stresses are linearly proportional to the strain rate, for example, thin motor oil. The liquid may in such a case optionally be a fluid that can flow from the longitudinal storing reservoir, to the capillary tube, and then to the longitudinal receiving reservoir, all in less than 1min.

The liquid may yet alternatively be a turbid fluid, for example, a lubricant or a paint.

The term "predetermined pressure" refers to the pressure value of the pressurized gas that enters the longitudinal storing reservoir to pressurize the liquid. By "predetermined" it is meant that the pressure is known (e.g. to the operator and/or to the system) when operating the system, such that the measurement relative to liquid flow may rely on such knowledge. The pressure may be constant or variable. Alternatively or additionally, the pressure may be controllable (e.g. by the operator and/or automatically by the system). The pressure value may thus be a controlled constant pressure value or a controlled varied pressure value.

The term "longitudinal" refers to the shape of an object with a length that is significantly larger than all other dimensions of the shape. A longitudinal shape extends along a longitudinal axis or a longitudinal curve and presents a length (along said axis or curve) that may for example be at least twice or at least five times higher than cross-sectional dimensions of the shape (i.e. any diameter of the shape perpendicular to said axis or curve).

The term "capillary tube" refers to a hollow tube (e.g. of a cylinder general shape) of a relatively small transverse cross-sectional area. For example, the ratio of the transverse cross-sectional area of the longitudinal receiving reservoir to the transverse cross-sectional area of the capillary tube lies between 1 and 600, such as 225 or of such order (where the expression "of such order" after a given value refers herein to any value equal to the given value within a 10% error).

The dimensions of the capillary tube may for example lie between 0.1mm and 1mm for the diameter, such as 0.39mm or of such order, and/or between 10mm and 100mm for the total length, such as 60mm or of such order. The term "total length" refers to the straight-line length (and not the curved length) from the end of the longitudinal storing reservoir to the top of the longitudinal storing reservoir or the end of the capillary tube to the top of the capillary tube.

The total length of the capillary tube may assist in allowing capillary flow to be established and in creating pressure drops due to viscous shear. The capillary tube may be a hollow needle or canula.

The expression, "configured so as to be positioned horizontally", refers to a designing of the longitudinal storing reservoir, the capillary tube and the longitudinal receiving reservoir in order to allow their horizontal positioning during the measurement relative to the flow of the liquid. During such a measurement, the longitudinal storing reservoir may therefore lie on its longest side, parallel to the horizontal plane. The capillary tube may lie on its longest side, parallel to the horizontal plane. The longitudinal receiving reservoir may lie on its longest side, parallel to the horizontal plane. The longitudinal storing reservoir, the capillary tube and the longitudinal receiving reservoir may be fixed one relative to the other and all extend in a same plane. During the measurement, this plane may be horizontal, so as to impart a horizontal positioning to the longitudinal storing reservoir, the capillary tube and the longitudinal receiving reservoir. The system may comprise a planar outer surface configured for acting as a support and arranged so as to impart such horizontal positioning to the system, for example when placed on a horizontal table. Alternatively, any two or all three of the longitudinal storing reservoir, the capillary tube and the longitudinal receiving reservoir may be movable one relative to the other. The longitudinal storing reservoir, the capillary tube and the longitudinal receiving reservoir may be (individually or by two) moved one relative to the other so as to position all three horizontally.

The term "horizontally" refers to a direction that is parallel with the apparent junction of earth and sky or parallel to the ground, where the ground is even and has a slope of zero. Thus, for longitudinal shapes, to be positioned "horizontally" means to have its longitudinal axis/curve substantially aligned with (i.e. parallel to) a horizontal plane, that is, a plane perpendicular to the gravity direction.

The expression, "perform a measurement relative to the flow of the liquid" may include measurements relative to the advancement of the liquid front in the longitudinal receiving reservoir over time. For example, when the predetermined pressure of the gas is constant, the flow rate of the liquid is constant and may be calculated using the measured velocity of the liquid and geometry of the longitudinal receiving reservoir.

The system may further be configured for calculating values for pressure drops of the measurement system using, for example, the equations of Idelchik and/or Poiseuille's law and/or alternative equations relating to pressure differentials. Obtaining values for the flow rate and pressure in the longitudinal receiving reservoir may then enable the system to calculate, for example, liquid shear rate and liquid viscosity. Another example may include the system using such values for the calculation of a drag coefficient of the longitudinal receiving reservoir.

A gas, which may for example be an inert gas, may enter a chamber of the longitudinal storing reservoir to pressurize the liquid. The liquid sample may, for example, form a surface area across the tube of, for example, 4cm². The ratio of the longitudinal cross-sectional ratio of the longitudinal storing reservoir to the transverse cross-sectional area of the capillary tube may lie between, for example, 1 and 800. This ratio may assist the gas may in rapidly pressurizing a small sample of liquid, for example, over a duration of one minute. This pressurization may force the liquid through the capillary tube and into the longitudinal receiving reservoir. The source of the pressurized gas, for example, a compressor, may deliver the gas at a pressure of up to 1.5bar, for example 1bar. The longitudinal storing reservoir may comprise an opening, for example at one end of the longitudinal storing reservoir. The longitudinal storing reservoir may for example comprise a tube having a closed end (forming a bottom) and an open or openable end (forming an entrance). The longitudinal storing reservoir comprises a cap provided with a septum at the opening to aid sealing of the measurement system. This combined with the pressurization with for example an inert gas assists in preventing contact with the atmosphere and minimizes risks of sample contamination. The system may thereby operate anaerobically so as to minimize risks of degradation of the liquid in presence of oxygen. In case the liquid is blood for example, this ensures that the measurement is not affected by oxidation and represents in vivo conditions. This may also hold true for any liquid for which it is standard to perform flow measurements under anaerobic conditions.

The measuring device may be, for example, outside of the longitudinal storing reservoir and/or the capillary tube and/or the longitudinal receiving reservoir in order to further minimize the risk of contamination of the liquid. The longitudinal storing reservoir and/or the capillary tube and/or the longitudinal receiving reservoir and/or another capillary tube performing the fluid connection of the source of pressurized gas to the longitudinal reservoir may be disposable. This is to minimize contamination between samples and limit the maximum number of elements to clean. The term "disposable" refers to the discarding of a component of the measurement system, with the intention of no longer using it for the same application. Alternatively or additionally, the measurement system may comprise inexpensive components that are already on the market and so are easily available, allowing for a more robust system. For example, a syringe needle and syringe body or sampling tube may act as the capillary tube and longitudinal receiving reservoir respectively. The system may comprise a tubular component for performing the fluid connection of the source of pressurized gas to the longitudinal storing reservoir. This may be another capillary tube, for example a bent hollow needle or a bent canula.

A predetermined geometry of the measurement system may include the longitudinal storing reservoir comprising an inner chamber with a volume lying between 1 mL and 20mL, for example 2.0mL or of such order. The longitudinal storing reservoir may have an inner diameter lying between 1mm and 5mm, for example 3.0mm or of such order. The term "inner diameter" refers to the internal diameter of the longitudinal storing reservoir and/or the capillary tube, for the length of the longitudinal receiving reservoir and/or the capillary tube for which the internal diameter remains constant

The longitudinal storing reservoir may have a total length lying between 3.0cm and 10.0cm, for example 5.0cm or of such order. The longitudinal storing reservoir may be, for example, a sampling tube.

The longitudinal receiving reservoir comprises an inner chamber with a volume lying between 0.5mL and 20mL, for example 1mL or of such order.

As previously mentioned, the ratio of the transverse cross-sectional area of the longitudinal receiving reservoir to the transverse cross-sectional area of the capillary tube may lie between 1 and 600, for example 225 or of such order. The geometry of the capillary tube relative to the longitudinal storing reservoir and the longitudinal receiving reservoir measurement system may allow for pressure losses to be largely due to the capillary tube flow, bringing the system closer to the real life scenarios of liquids flowing in microcirculation, such as blood in the capillaries or oil in well-type porous networks. This ratio may also contribute to the precision of the measurement system. The precision may, for example, be sufficient for distinguishing in particular liquids of viscosity 1 to 50CtP with a precision of 0.1CtP, which may be sufficient for executing studies on blood, glycerol, an EOR polymer or petrol, for example. Other factors which may contribute to the precision of the system may include, for example, the length of the capillary tube, the applied pressure and the diameter of the longitudinal receiving reservoir.

The predetermined geometry of the system and the use of the longitudinal receiving reservoir to collect the liquid may further assist in increasing the speed of the measurement.

The predetermined geometry of the measurement system may enable it to be of a size that makes it easily portable.

The predetermined geometry may also permit limited samples of liquid to be tested, with minimizing the presence of a dead volume and so further contributing to the efficiency of the system. For example, the liquid sample may be a quantity as small as 1mL or of such order. This may be of particular interest if the sample is for example, a patient's blood.

At least one wall of the longitudinal receiving reservoir may be transparent. The measurement device may comprise a camera configured to take images of the position of the flow front of the liquid through the at least one transparent wall as it enters the longitudinal receiving reservoir from the capillary tube. The measuring device may also comprise a computer and computer program for processing images obtained by the camera to determine the instantaneous flow rate. Alternatively, the measuring device may send the images to a remote computer having such a program. The computer program may then provide values for pressure drops across the measurement system. The computer program may subsequently provide values for flow properties such as, for example, the shear rate and/or the viscosity for a transitional and/or stable flow. The computer program may then create a graph, for example, a viscosity versus shear rate gradient flow curve.

The measurement system may provide a real time result of the measurement relative to the flow of the liquid inside the longitudinal receiving reservoir and/or of the viscosity of the liquid, as it may not require the post-treatment of data.

The measurement system may be compatible to work with components of a range of different sizes, as previously described, resulting in a system that can work at different flow rates and/or shear gradients.

The inner chamber of the longitudinal storing reservoir and/or the inner chamber of the longitudinal receiving reservoir may be configured to be set under a controlled atmosphere, for example controlled pressure and/or controlled temperature. The term "controlled atmosphere" refers to the controlling of the pressure and temperature of the measurement system. This may improve the quality of the measured results.

It is also proposed a measurement method, the method involving operation of a measurement system as previously described., The method includes sampling a liquid via the longitudinal storing reservoir and positioning horizontally the longitudinal storing reservoir, the capillary tube and the longitudinal receiving reservoir. The method then involves performing the measurement relative to the flow of the liquid with the measurement device while the longitudinal storing reservoir, the capillary tube and the longitudinal receiving reservoir are positioned horizontally.

The system operator may obtain a sample of liquid in a longitudinal storing reservoir, such as a sampling tube comprising a cap provided with a septum. If the sample is for example, blood, the operator may use the longitudinal storing reservoir to obtain the sample directly from a patient. The operator may connect the source of pressurized gas to the longitudinal storing reservoir by piercing the cap provided with a septum with a capillary tube for supplying the pressurized gas. This may allow for a simple connection that assists in maintaining an anaerobic system. The operator may pierce the cap provided with a septum at a point that is a defined distance from the circumference of the cap and a defined distance from the center point of top surface of the cap. The operator may then position the longitudinal storing reservoir horizontally on a flat and level surface. The operator may then align the longitudinal storing reservoir with another capillary tube so that the capillary tube is also horizontal and on a flat and level surface. The capillary tube may be, for example, a hollow needle or canula, connected to a longitudinal receiving reservoir. The longitudinal receiving reservoir may be, for example, a syringe body or another sampling tube. The operator may then pierce the cap provided with a septum, plunging the capillary tube into the liquid stored in a chamber of the longitudinal storing reservoir. This may allow for a simple connection that assists in maintaining an anaerobic system. The operator may pierce the cap provided with a septum along the same diameter as the first pierced point of the cap, at a defined distance from the circumference of the cap and a defined distance from the center point of top surface of the cap. After activating the pressure source, the operator may then take measurements of the advancement of the liquid flow front in the longitudinal receiving reservoir using a measurement device, such as a camera, computer and computer program. After a single use (upon completion of the measurement/s), the operator may throw away the longitudinal storing reservoir and/or capillary tube and/or longitudinal receiving reservoir and/or another capillary tube performing the fluid connection of the source of pressurized gas to the longitudinal storing reservoir. He may replace them with another longitudinal storing reservoir and/or capillary tube and/or longitudinal receiving reservoir and/or another capillary tube performing the fluid connection of the source of pressurized gas to the longitudinal storing reservoir before carrying out new measurements on a new sample. Upon completion of the measurements the operator may again dispose of the longitudinal storing reservoir and/or capillary tube and/or longitudinal receiving reservoir and replace them with another longitudinal storing reservoir and/or capillary tube and/or longitudinal receiving reservoir before carrying out new measurements on another new sample.

The operator may obtain real time value outputs for flow properties of the liquid from the computer program through a user interface of the computer. The computer program may calculate values for pressure drops of the measurement system, using the equations of Idelchik and/or Poiseuille's law and/or alternative equations relating to pressure differentials. Using these values and/or other parameters of the measurement system, such as, for example, geometry, the computer program may calculate output values for a property or properties of the liquid. In one example, the operator may retrieve output values for shear rate and viscosity and/or a viscosity versus shear rate gradient flow curve.

It is also proposed a kit comprising a longitudinal storing reservoir, a longitudinal receiving reservoir, and a capillary tube. The kit may be assembled so as to form a measurement system as previously described. The kit may include a longitudinal storing reservoir for a sample of liquid, such as a sampling tube comprising a cap provided with a septum. The kit may provide a capillary tube for connection with the longitudinal storing reservoir. The kit may also comprise a longitudinal receiving reservoir for connection with the capillary tube. The kit may provide an additional capillary tube for connection to a source of pressurized gas. The kit may provide a frame for arranging the longitudinal storing reservoir, longitudinal receiving reservoir and capillary tube horizontally. The kit may provide multiple longitudinal storing reservoirs and/or multiple capillary tubes and/or multiple longitudinal receiving reservoirs. The measurement system may use these components for measuring flow property values for new samples once the measurement system has completed measuring a first sample.

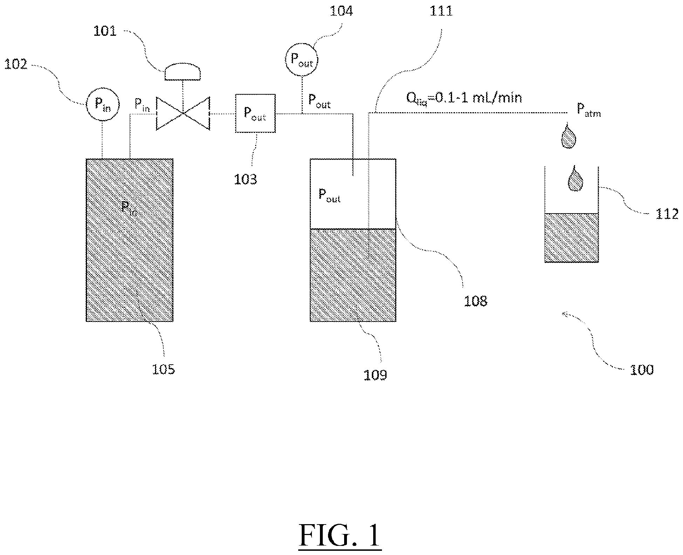

FIG.1 illustrates an example of the measurement system 100 in a schematic form. A pressurized capacity 105 of a pressure Pᵢₙ is connected to a manometer 102 for measuring the pressure Pᵢₙ. The pressurized capacity 105 is also connected to a pressure regulator 101 for controlling the pressure Pᵢₙ. The controlled pressure Pₒᵤₜ passes through a buffer capacity 103 and is measured by a manometer 104 before entering a zone of the longitudinal storing reservoir 108 that is unoccupied by a liquid 109. The longitudinal storing reservoir 108 becomes a pressurized flask with the influx of Pₒᵤₜ. A capillary tube 111 plunges into longitudinal storing reservoir 108 and the liquid 109, forced by the pressurized gas, flows into the capillary tube 111 at a controlled flow rate Q_{liq}, for example of 0.1-1mL/min. The liquid 109 flows through the capillary tube 111 at a controlled flow rate Q_{liq} before entering a longitudinal receiving reservoir 112 at Pₐₜₘ.

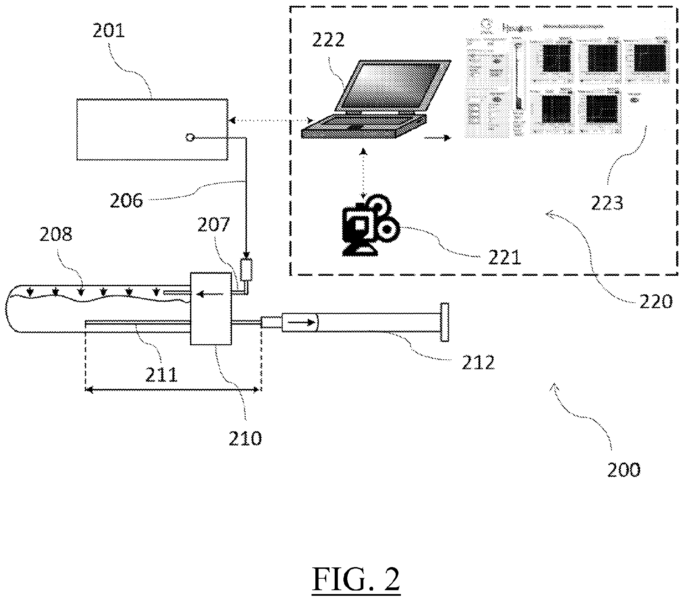

FIG. 2 illustrates an example of the measurement system 200. A pressure regulator 201 is controlled by a computer system 222, forming part of a measuring device 220. The pressure regulator 201, with a pressure set point 206, controls a pressurized gas through a tube 207 which may be a capillary tube. The tube 207 connects the pressurized gas to a longitudinal storing reservoir 208. The tube 207 is bent at 90° and enters the longitudinal storing reservoir 208 by piercing through a cap provided with a septum 210 at the opening of the longitudinal storing reservoir 208. The longitudinal storing reservoir 208 is horizontal, and houses a sample of liquid that is horizontal inside the reservoir 208. The predetermined pressurized gas pressurizes the horizontally-lying liquid across the length of the longitudinal storing reservoir 208. Meanwhile, another capillary tube 211 pierces through the provided cap with a septum 210 to plunge into the liquid from a horizontal position parallel to that of the longitudinal storing reservoir 208. The pressurized gas forces the liquid through the capillary tube 211 at a controlled flow rate. The liquid flows into a longitudinal receiving reservoir 212, which also lies horizontally. A camera 221, forming part of a measuring device 220, measures the advancement of the liquid front along the longitudinal receiving reservoir 212 from a position external to the longitudinal receiving reservoir 212. The camera relays measurements to the computer system 222 which runs a program 223 to provide real time results relative to the flow of the liquid, for example, a viscosity versus shear rate gradient flow curve.

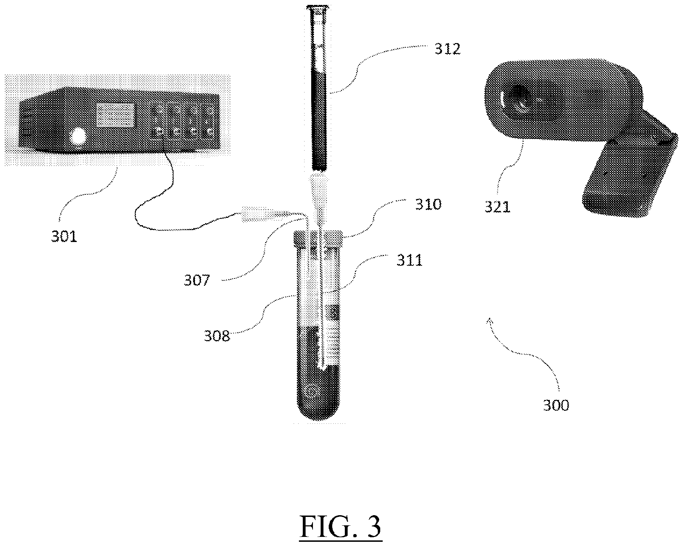

FIG. 3 shows an example of the measurement system 300. A microfluidic controller 301 is connected to a tube 307 in the form of a bent hollow needle. A longitudinal storing reservoir 308 houses a sample of liquid. The longitudinal sorting reservoir 308 is in the form of a sampling tube. The tube 307 pierces through the cap with a septum 310 of the longitudinal storing reservoir 308 to a access a zone of the reservoir that is unoccupied by liquid. A capillary tube 311 in the form of a straight hollow needle pierces through the cap with a septum 310 to plunge into the stored liquid. The capillary tube 311 connects to a longitudinal receiving reservoir 312, here in the form of a syringe body, to collect the liquid as it flows from the longitudinal storing reservoir 308, into and through the capillary tube 312. A camera 321 takes a position opposite the longitudinal receiving reservoir 312 so that it may measure the advancement of the liquid front as it flows into the longitudinal receiving reservoir 312.

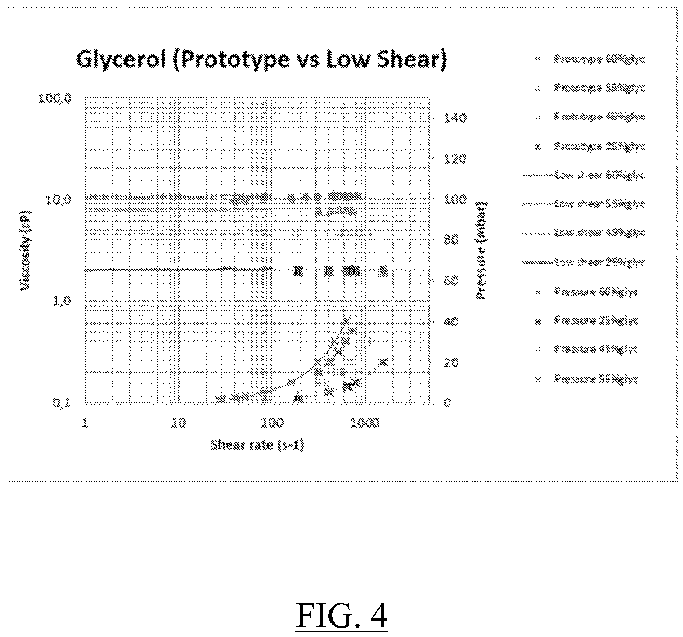

FIG. 4 shows a graph relating viscosity, shear rate and pressure for liquid samples containing different amounts of glycerol. A first "prototype" batch contains experimental values for samples of 60%, 55%, 45% and 25% glycerol. A second "low shear" batch contains values from a low shear rheometer (i.e. a rheometer with a Couette geometry). Controlled at a temperature of 20°C, the batch contains samples of 60%, 55%, 45% and 25% glycerol. It can be seen that, the higher the viscosity, the lower the minimum shear rate at which measurement is possible. A third "pressure" batch corresponds to values of pressure drop at the ends of the capillary, which are equal to the pressure imposed by the pressure source. The batch contains samples of 60%, 55%, 45% and 25% glycerol. The prototype batch displays the relationship between shear rate and viscosity for a constant pressure. For samples of a higher percentage of glycerol, the viscosity increases.

The low shear batch displays the relationship between shear rate and viscosity for a constant pressure. Shear rate varies between 0.89s⁻¹ and 100 s⁻¹, yielding viscosity results that remain mostly constant for samples containing the same percentage of glycerol. However viscosity values are similar to those of the higher shear rate prototype batch. Viscosity increases for samples of a higher percentage of glycerol.

The pressure batch displays the relationship between shear rate and viscosity for a varied pressure. The viscosity increases for increased shear rate and increased pressure for all samples. Samples of a higher percentage of glycerol experience higher values of viscosity.

## Claims

1. A measurement system (100, 200, 300), the measurement system comprising a source of pressurized gas (105) configured to deliver a gas at a predetermined pressure (Pₒᵤₜ), a longitudinal storing reservoir (108, 208, 308) configured to store a liquid (109) and comprising a cap, a longitudinal receiving reservoir (112, 212, 312), and a capillary tube (111, 211, 311) fluidly connecting the longitudinal storing reservoir and the longitudinal receiving reservoir, the source of pressurized gas being fluidly connected to the longitudinal storing reservoir to pressurize an inner chamber of the longitudinal storing reservoir, and a measurement device (220) configured to perform a measurement relative to the flow of the liquid inside an inner chamber of the longitudinal receiving reservoir when the pressurized gas is provided in the inner chamber of the longitudinal storing reservoir by the source of pressurized gas, the longitudinal storing reservoir, the capillary tube and the longitudinal receiving reservoir being configured so as to be positioned horizontally during the measurement relative to the flow of the liquid, **characterized in that** the longitudinal storing reservoir is closed by the cap provided with a septum (210, 310), the capillary tube having pierced the cap provided with the septum and having been plunged into the liquid stored in the chamber of the longitudinal storing reservoir, wherein a volume of the inner chamber of the longitudinal storing reservoir lies between 1mL and 20mL and wherein a volume of the inner chamber of the longitudinal receiving reservoir lies between 0.5mL and 20mL, the horizontal positioning providing a relatively large surface area of the liquid in the longitudinal storing reservoir which is exposed to pressurized gas above it, compared to the surface area of a meniscus of the liquid entering the longitudinal receiving reservoir.

2. The measurement system according to claim 1, wherein the measurement system is configured to provide an estimate of a flow property value of the liquid on the basis of the calculation of pressure drops across the capillary tube, for example using Poiseuille's law or the equations of Idelchik.

3. The measurement system according to claim 1 or 2, wherein the flow property is the viscosity of the liquid, the measurement system thereby forming a viscosity measurement system.

4. The measurement system according to any one of claims 1 to 3, wherein at least one wall of the longitudinal receiving reservoir is transparent, and the measurement device comprises a camera (221, 321) configured to detect an instantaneous position of the flow front of the liquid in the longitudinal receiving reservoir through the at least one wall.

5. The measurement system according to any one of claims 1 to 4, wherein the ratio of the transverse cross-sectional area of the longitudinal receiving reservoir to the transverse cross-sectional area of the capillary tube lies between 1 and 600, for example 225, or within 10% less than 225, or within 10% greater than 225; and/or
wherein a volume of the inner chamber of the longitudinal storing reservoir is 2.0mL, or within 10% less than 2.0mL, or within 10% greater than 2.0mL; and/or
wherein a volume of the inner chamber of the longitudinal receiving reservoir is 1mL, or within 10% less than 1mL, or within 10% greater than 1mL; and/or wherein the longitudinal storing reservoir has an inner diameter lying between 1mm and 5mm, for example 3.0mm, or within 10% less than 3.0mm, or within 10% greater than 3.0mm; and/or
wherein the longitudinal storing reservoir has a total length lying between 3.0cm and 10.0cm, for example 5.0cm, or within 10% less than 5.0cm, or within 10% greater than 5.0cm; and/or
wherein the capillary tube has an inner diameter lying between 0.1mm and 1mm, for example 0.39mm, or within 10% less than 0.39mm, or within 10% greater than 0.39mm; and/or
wherein the capillary tube has a total length lying between 10mm and 100mm, for example 60mm, or within 10% less than 60mm, or within 10% greater than 60mm.

6. The measurement system according to any one of claims 1 to 5, wherein the longitudinal storing reservoir is a sampling tube; and/or
wherein the longitudinal receiving reservoir is a syringe body or a sampling tube; and/or
wherein the capillary tube is a hollow needle or a cannula.

7. The measurement system according to any one of claims 1 to 6, wherein the source of pressurized gas is configured to deliver a gas pressurized up to 1.5bar, for example 1bar.

8. The measurement system according to any one of claims 1 to 7, wherein the measurement system further comprises another capillary tube, the other capillary tube performing the fluid connection of the source of pressurized gas to the longitudinal storing reservoir, for example a hollow needle or a cannula, for example a bent hollow needle or a bent cannula.

9. The measurement system according to any one of claims 1 to 8, wherein the longitudinal storing reservoir and/or the capillary tube and/or the longitudinal receiving reservoir and/or another capillary tube performing the fluid connection of the source of pressurized gas to the longitudinal storing reservoir is/are disposable.

10. The measurement system according to any one of claims 1 to 9, wherein the measurement device is configured to provide a real time result of the measurement relative to the flow of the liquid inside the longitudinal receiving reservoir and/or of the viscosity of the liquid.

11. The measurement system according to any one of claims 1 to 10, wherein the inner chamber of the longitudinal storing reservoir and/or the inner chamber of the longitudinal receiving reservoir is/are configured to be set under a controlled atmosphere, wherein the pressure and temperature of the measurement system are controlled.

12. A measurement method comprising:
- providing a measurement system according to any one of claims 1 to 11;
- sampling a liquid via the longitudinal storing reservoir;
- positioning horizontally the longitudinal storing reservoir, the capillary tube and the longitudinal receiving reservoir;
- piercing a cap provided with a septum and plunging the capillary tube into the liquid stored in the chamber of the longitudinal storing reservoir; and
- performing the measurement relative to the flow of the liquid with the measurement device while the longitudinal storing reservoir, the capillary tube and the longitudinal receiving reservoir are positioned horizontally.

13. The measurement method of claim 12, wherein the longitudinal storing reservoir and/or the capillary tube and/or the longitudinal receiving reservoir and/or another capillary tube performing the fluid connection of the source of pressurized gas to the longitudinal storing reservoir is/are thrown away after a single use.

14. A kit comprising a longitudinal storing reservoir, a longitudinal receiving reservoir, a capillary tube, and cap provided with a septum, the kit being configured to be assembled with a source of pressurized gas and a measurement device so as to form a measurement system according to any one of claims 1 to 11.

## Patentansprüche

1. Messsystem (100, 200, 300), das Messsystem umfassend eine Druckgasquelle (105), die konfiguriert ist, um ein Gas mit einem vorbestimmten Druck (Pₒᵤₜ) zuzuführen, einen Längsspeicherbehälter (108, 208, 308), der konfiguriert ist, um eine Flüssigkeit (109) zu speichern, und umfassend eine Kappe, einen Längsaufnahmebehälter (112, 212, 312) und ein Kapillarrohr (111, 211, 311), das den Längsspeicherbehälter und den Längsaufnahmebehälter fluidisch verbindet, wobei die Druckgasquelle fluidisch mit dem Längsspeicherbehälter verbunden ist, um eine innere Kammer des Längsspeicherbehälters unter Druck zu setzen, und eine Messvorrichtung (220), die konfiguriert ist, um eine Messung in Bezug auf den Fluss der Flüssigkeit innerhalb einer inneren Kammer des Längsaufnahmebehälters durchzuführen, wenn das Druckgas durch die Druckgasquelle in der inneren Kammer des Längsspeicherbehälters bereitgestellt wird, der Längsspeicherbehälter, das Kapillarrohr und der Längsaufnahmebehälter konfiguriert sind, um während der Messung in Bezug auf den Fluss der Flüssigkeit horizontal positioniert zu sein, **dadurch gekennzeichnet, dass** der Längsspeicherbehälter durch die mit einem Septum (210, 310) versehene Kappe verschlossen ist, wobei das Kapillarrohr die mit dem Septum versehene Kappe durchstoßen hat und in die in der Kammer des Längsspeicherbehälters gespeicherte Flüssigkeit eingetaucht wurde, wobei ein Volumen der inneren Kammer des Längsspeicherbehälters zwischen 1 ml und 20 ml ist, und wobei ein Volumen der inneren Kammer des Längsaufnahmebehälters zwischen 0,5 ml und 20 ml ist, wobei die horizontale Positionierung eine relativ große Oberfläche der Flüssigkeit in dem Längsspeicherbehälter bereitstellt, die dem darüber befindlichen Druckgas ausgesetzt ist, verglichen mit der Oberfläche eines Meniskus der in den Längsaufnahmebehälter eintretenden Flüssigkeit.

2. Messsystem nach Anspruch 1, wobei das Messsystem konfiguriert ist, um eine Schätzung eines Fließeigenschaftswerts der Flüssigkeit auf der Grundlage der Berechnung von Druckabfällen über das Kapillarrohr bereitzustellen, beispielsweise unter Verwendung des Poiseuille'schen Gesetzes oder der Gleichungen von Ideltschik.

3. Messsystem nach Anspruch 1 oder 2, wobei die Fließeigenschaft die Viskosität der Flüssigkeit ist und das Messsystem dadurch ein Viskositätsmesssystem bildet.

4. Messsystem nach einem der Ansprüche 1 bis 3, wobei mindestens eine Wand des Längsaufnahmebehälters transparent ist und die Messvorrichtung eine Kamera (221, 321) umfasst, die konfiguriert ist, um eine momentane Position der Fließfront der Flüssigkeit in dem Längsaufnahmebehälter durch die mindestens eine Wand zu erfassen.

5. Messsystem nach einem der Ansprüche 1 bis 4, wobei das Verhältnis der Querschnittsfläche des Längsaufnahmebehälters zu der Querschnittsfläche des Kapillarrohrs zwischen 1 und 600, beispielsweise 225, oder innerhalb von 10 % weniger als 225 oder innerhalb von 10 % größer als 225 liegt; und/oder
wobei ein Volumen der inneren Kammer des Längsspeicherbehälters 2,0 ml oder innerhalb von 10 % weniger als 2,0 ml oder innerhalb von 10 % mehr als 2,0 ml ist; und/oder
wobei das Volumen der inneren Kammer des Längsaufnahmebehälters 1 ml oder innerhalb von 10 % weniger als 1 ml oder innerhalb von 10 % mehr als 1 ml ist; und/oder wobei der Längsspeicherbehälter einen Innendurchmesser aufweist, der zwischen 1 mm und 5 mm liegt, beispielsweise 3,0 mm oder innerhalb von 10 % weniger als 3,0 mm oder innerhalb von 10 % mehr als 3,0 mm; und/oder
wobei der Längsspeicherbehälter eine Gesamtlänge zwischen 3,0 cm und 10,0 cm, beispielsweise 5,0 cm, oder innerhalb von 10 % weniger als 5,0 cm, oder innerhalb von 10 % mehr als 5,0 cm, aufweist; und/oder
wobei das Kapillarrohr einen Innendurchmesser aufweist, der zwischen 0,1 mm und 1 mm, beispielsweise 0,39 mm, oder innerhalb von 10 % weniger als 0,39 mm oder innerhalb von 10 % mehr als 0,39 mm liegt; und/oder
wobei das Kapillarrohr eine Gesamtlänge zwischen 10 mm und 100 mm, zum Beispiel 60 mm, oder innerhalb von 10 % weniger als 60 mm oder innerhalb von 10 % mehr als 60 mm aufweist.

6. Messsystem nach einem der Ansprüche 1 bis 5, wobei der Längsspeicherbehälter ein Probenahmerohr ist; und/oder
wobei das Längsaufnahmebehälter ein Spritzenkörper oder ein Probenahmeschlauch ist; und/oder
wobei das Kapillarrohr eine Hohlnadel oder eine Kanüle ist.

7. Messsystem nach einem der Ansprüche 1 bis 6, wobei die Druckgasquelle konfiguriert ist, um ein unter Druck stehendes Gas mit bis zu 1,5 bar, zum Beispiel 1 bar, bereitzustellen.

8. Messsystem nach einem der Ansprüche 1 bis 7, wobei das Messsystem ferner ein weiteres Kapillarrohr umfasst, das andere Kapillarrohr die Fluidverbindung von der Druckgasquelle zu dem Längsspeicherbehälter, beispielsweise einer Hohlnadel oder einer Kanüle, beispielsweise einer gebogenen Hohlnadel oder einer gebogenen Kanüle, herstellt.

9. Messsystem nach einem der Ansprüche 1 bis 8, wobei der Längsspeicherbehälter und/oder das Kapillarrohr und/oder der Längsaufnahmebehälter und/oder ein weiteres Kapillarrohr, das die Fluidverbindung der Druckgasquelle mit dem Längsspeicherbehälter herstellt, ein Einwegartikel ist/sind.

10. Messsystem nach einem der Ansprüche 1 bis 9, wobei die Messvorrichtung konfiguriert ist, um ein Echtzeitresultat der Messung in Bezug auf den Fluss der Flüssigkeit innerhalb des Längsaufnahmebehälters und/oder der Viskosität der Flüssigkeit bereitzustellen.

11. Messsystem nach einem der Ansprüche 1 bis 10, wobei die innere Kammer des Längsspeicherbehälters und/oder die innere Kammer des Längsaufnahmebehälters unter eine kontrollierte Atmosphäre gestellt wird/werden, wobei Druck und Temperatur des Messsystems geregelt sind.

12. Messverfahren, umfassend:
- Bereitstellen eines Messsystems nach einem der Ansprüche 1 bis 11;
- Entnehmen einer Flüssigkeitsprobe über den Längsspeicherbehälter;
- horizontales Positionieren des Längsspeicherbehälters, des Kapillarrohrs und des Längsaufnahmebehälters;
- Durchstechen einer mit einem Septum versehenen Kappe und Eintauchen des Kapillarrohrs in die in der Kammer des Längsspeicherbehälters gespeicherte Flüssigkeit; und
- Durchführen der Messung in Bezug auf den Fluss der Flüssigkeit mit der Messvorrichtung, während der Längsspeicherbehälter, das Kapillarrohr und der Längsaufnahmebehälter horizontal positioniert sind.

13. Messverfahren nach Anspruch 12, wobei der Längsspeicherbehälter und/oder das Kapillarrohr und/oder der Längsaufnahmebehälter und/oder ein weiteres Kapillarrohr, das die Fluidverbindung der Druckgasquelle mit dem Längsspeicherbehälter herstellt, nach einmaligem Gebrauch entsorgt wird/werden.

14. Kit, umfassend einen Längsspeicherbehälter, einen Längsaufnahmebehälter, ein Kapillarrohr und eine mit einem Septum versehenen Kappe, wobei das Kit konfiguriert ist, um mit einer Druckgasquelle und einer Messvorrichtung zusammengesetzt zu werden, um ein Messsystem nach einem der Ansprüche 1 bis 11 zu bilden.

## Revendications

1. Système de mesure (100, 200, 300), le système de mesure comprenant une source de gaz sous pression (105) configurée pour délivrer un gaz à une pression prédéterminée (Pₒᵤₜ), un réservoir de stockage longitudinal (108, 208, 308) configuré pour stocker un liquide (109) et comprenant un capuchon, un réservoir de réception longitudinal (112, 212, 312), et un tube capillaire (111, 211, 311) reliant fluidiquement le réservoir de stockage longitudinal et le réservoir de réception longitudinal, la source de gaz sous pression étant reliée fluidiquement au réservoir de stockage longitudinal pour mettre sous pression une chambre interne du réservoir de stockage longitudinal, et un dispositif de mesure (220) configuré pour effectuer une mesure relative à l'écoulement du liquide à l'intérieur d'une chambre interne du réservoir de réception longitudinal lorsque le gaz sous pression est fourni dans la chambre interne du réservoir de stockage longitudinal par la source de gaz sous pression, le réservoir de stockage longitudinal, le tube capillaire et le réservoir de réception longitudinal étant configurés de manière à être positionnés horizontalement pendant la mesure par rapport à l'écoulement du liquide, **caractérisé en ce que** le réservoir de stockage longitudinal est fermé par le capuchon doté d'un septum (210, 310), le tube capillaire ayant percé le capuchon doté du septum et ayant été plongé dans le liquide stocké dans la chambre du réservoir de stockage longitudinal, dans lequel un volume de la chambre interne du réservoir de stockage longitudinal est compris entre 1 ml et 20 ml et dans lequel un volume de la chambre interne du réservoir de réception longitudinal est compris entre 0,5 ml et 20 ml, le positionnement horizontal fournissant une surface relativement grande du liquide dans le réservoir de stockage longitudinal qui est exposée au gaz sous pression au-dessus de celui-ci, par rapport à la surface d'un ménisque du liquide entrant dans le réservoir de réception longitudinal.

2. Système de mesure selon la revendication 1, le système de mesure étant configuré pour fournir une estimation d'une valeur de propriété d'écoulement du liquide sur la base du calcul des chutes de pression de part et d'autre du tube capillaire, par exemple en utilisant la loi de Poiseuille ou les équations d'Idelchik.

3. Système de mesure selon la revendication 1 ou 2, dans lequel la propriété d'écoulement est la viscosité du liquide, le système de mesure formant ainsi un système de mesure de viscosité.

4. Système de mesure selon l'une quelconque des revendications 1 à 3, dans lequel au moins une paroi du réservoir de réception longitudinal est transparente, et le dispositif de mesure comprend une caméra (221, 321) configurée pour détecter une position instantanée du front d'écoulement du liquide dans le réservoir de réception longitudinal à travers la ou les parois.

5. Système de mesure selon l'une quelconque des revendications 1 à 4, dans lequel le rapport de la surface de la section transversale du réservoir de réception longitudinal à la surface de la section transversale du tube capillaire est compris entre 1 et 600, par exemple 225, ou au plus à 10 % au-dessous de 225, ou au plus à 10 % au-dessus de 225 ; et/ou
dans lequel un volume de la chambre interne du réservoir de stockage longitudinal est de 2,0 ml, ou au plus à 10 % au-dessous de 2,0 ml, ou au plus à 10 % au-dessus de 2,0 ml ; et/ou
dans lequel un volume de la chambre interne du réservoir de réception longitudinal est de 1 ml, ou au plus à 10 % au-dessous de 1 ml, ou au plus à 10 % au-dessus de 1 ml ; et/ou
dans lequel le réservoir de stockage longitudinal a un diamètre interne compris entre 1 mm et 5 mm, par exemple 3,0 mm, ou au plus à 10 % au-dessous de 3,0 mm, ou au plus à 10 % au-dessus de 3,0 mm ; et/ou
dans lequel le réservoir de stockage longitudinal a une longueur totale comprise entre 3,0 cm et 10,0 cm, par exemple 5,0 cm, ou au plus à 10 % au-dessous de 5,0 cm, ou au plus à 10 % au-dessus de 5,0 cm ; et/ou
dans lequel le tube capillaire a un diamètre interne compris entre 0,1 mm et 1 mm, par exemple 0,39 mm, ou au plus à 10 % au-dessous de 0,39 mm, ou au plus à 10 % au-dessus de 0,39 mm ; et/ou
dans lequel le tube capillaire a une longueur totale comprise entre 10 mm et 100 mm, par exemple 60 mm, ou au plus à 10 % au-dessous de 60 mm, ou au plus à 10 % au-dessus de 60 mm.

6. Système de mesure selon l'une quelconque des revendications 1 à 5, dans lequel le réservoir de stockage longitudinal est un tube d'échantillonnage ; et/ou dans lequel le réservoir de réception longitudinal est un corps de seringue ou un tube d'échantillonnage ; et/ou
dans lequel le tube capillaire est une aiguille creuse ou une canule.

7. Système de mesure selon l'une quelconque des revendications 1 à 6, dans lequel la source de gaz sous pression est configurée pour délivrer un gaz sous pression jusqu'à 1,5 bar, par exemple 1 bar.

8. Système de mesure selon l'une quelconque des revendications 1 à 7, le système de mesure comprenant en outre un autre tube capillaire, l'autre tube capillaire réalisant le raccordement fluidique de la source de gaz sous pression au réservoir de stockage longitudinal, par exemple une aiguille creuse ou une canule, par exemple une aiguille creuse courbe ou une canule courbe.

9. Système de mesure selon l'une quelconque des revendications 1 à 8, dans lequel le réservoir de stockage longitudinal et/ou le tube capillaire et/ou le réservoir de réception longitudinal et/ou un autre tube capillaire réalisant le raccordement fluidique de la source de gaz sous pression au réservoir de stockage longitudinal est/sont jetables.

10. Système de mesure selon l'une quelconque des revendications 1 à 9, dans lequel le dispositif de mesure est configuré pour fournir un résultat en temps réel de la mesure par rapport à l'écoulement du liquide à l'intérieur du réservoir de réception longitudinal et/ou à la viscosité du liquide.

11. Système de mesure selon l'une quelconque des revendications 1 à 10, dans lequel la chambre interne du réservoir de stockage longitudinal et/ou la chambre interne du réservoir de réception longitudinal est/sont configurées pour être placées sous une atmosphère contrôlée, la pression et la température du système de mesure étant régulées.

12. Procédé de mesure comprenant :
- la fourniture d'un système de mesure selon l'une quelconque des revendications 1 à 11 ;
- l'échantillonnage d'un liquide via le réservoir de stockage longitudinal ;
- le positionnement horizontal du réservoir de stockage longitudinal, du tube capillaire et du réservoir de réception longitudinal ;
- le perçage d'un capuchon doté d'un septum et la plongée du tube capillaire dans le liquide stocké dans la chambre du réservoir de stockage longitudinal ; et
- la réalisation de la mesure relative à l'écoulement du liquide avec le dispositif de mesure tandis que le réservoir de stockage longitudinal, le tube capillaire et le réservoir de réception longitudinal sont positionnés horizontalement.

13. Procédé de mesure selon la revendication 12, dans lequel le réservoir de stockage longitudinal et/ou le tube capillaire et/ou le réservoir de réception longitudinal et/ou un autre tube capillaire réalisant le raccordement fluidique de la source de gaz sous pression au réservoir de stockage longitudinal est/sont jeté(s) après une utilisation unique.

14. Kit comprenant un réservoir de stockage longitudinal, un réservoir de réception longitudinal, un tube capillaire et un capuchon doté d'un septum, le kit étant configuré pour être assemblé à une source de gaz sous pression et un dispositif de mesure de manière à former un système de mesure selon l'une quelconque des revendications 1 à 11.
